## Europäisches Patentamt

## European Patent Office

## Office européen des brevets

(11) Veröffentlichungsnummer: **0 397 062**
**A2**

# (12) EUROPÄISCHE PATENTANMELDUNG

(21) Anmeldenummer: **90108474.9**

(22) Anmeldetag: **05.05.90**

(51) Int. Cl.⁵: **H01B  11/10**

(30) Priorität: **06.05.89 DE 3914930**
**17.10.89 DE 3934606**

(43) Veröffentlichungstag der Anmeldung:
**14.11.90 Patentblatt  90/46**

(84) Benannte Vertragsstaaten:
**FR GB**

(71) Anmelder: **Messerschmitt-Bölkow-Blohm GmbH**
**Robert-Koch-Strasse**
**D-8012 Ottobrunn(DE)**

(72) Erfinder: **Kirma, Safa**
**Holunderweg 34**
**D-2000 Wedel/Holstein(DE)**

(54) **Einrichtung zum Schutz elektrischer Anlagen.**

(57) Bei einer Einrichtung zum Schutz elektrischer Anlagen gegen elektromagnetische Störungen, insbesondere Überspannungen und Blitzeinwirkungen, in Form metallischer Profilschläuche, die die zwischen den einzelnen elektrischen Geräten verlegten Leitungen umgeben und die elektrisch leitend mit Ableitpunkten verbunden sind, ist vorgesehen, daß die Elemente, wie Verzweigungselemente (101), in ihren mit der Außenfläche des Profilschlauches 4,10,11,12,13 in Berührung kommenden Bereichen mindestens teilweise der Außenform des Profilschlauches 4,10,11,12,13 angepaßt werden. Hierdurch wird die Herstellung dieser Teile wesentlich vereinfacht.

EP 0 397 062 A2

## Einrichtung zum Schutz elektrischer Anlagen

Die Erfindung betrifft eine Einrichtung zum Schutz elektrischer Anlagen gegen elektromagnetische Störungen, insbesondere Überspannungen und Blitzeinwirkungen, in Form metallischer Profilschläuche, die die zwischen den einzelnen elektrischen Geräten verlegten Leitungen umgeben und die elektrisch leitend mit Ableitpunkten verbunden sind.

Einrichtungen dieser Art werden insbesondere in Flugzeugen benötigt, in denen nicht nur auf relativ engem Raum eine große Anzahl elektrischer Geräte mit sehr unterschiedlichen Nutzsignalen und Störungsempfindlichkeiten angeordnet ist und bei denen die Möglichkeit gegenseitiger Beeinflussung zuverlässig ausgeschaltet sein muß, sondern die zugleich in ihrer Sicherheit durch die Auswirkungen eines Blitzeinschlages auf die elektronische Ausrüstung stark gefährdet sind.

Aus diesem Grunde stellt es eine bereits bekannte Maßnahme dar, elektrische Verbindungsleitungen in Flugzeugen, insbesondere auch ganze Kabelbäume, mit Abschirmungen aus metallisch leitendem Material zu versehen und diese Abschirmungen jeweils an den Enden mit den Gehäusen der elektrischen Geräte oder mit in diesen speziell vorgesehenen Masseleitungen zu verbinden.

Zu diesem Zweck wird im allgemeinen ein aus einzelnen Metallitzen bestehendes schlauchförmiges Geflecht verwendet, das, im Fall stromführender Steckerverbindungen, an den Kabelenden mit dem metallischen Stekkergehäuse verbunden ist. Häufig erfolgt die Verbindung dieses Geflechtes mit den vorgesehenen Ableitpunkten aber auch über separate Schellen, die an den Kabelenden das Geflecht umgeben und von denen aus ein separater Ableiter, der auch als "pig tail" bezeichnet wird, zum Ableitpunkt geführt ist.

Ein Nachteil der bekannten Abschirmeinrichtungen liegt darin, daß die hierbei eingesetzten Anschluß- und Verbindungselemente nicht nur relativ aufwendig in ihrer Herstellung sind und ein vergleichsweise hohes Eigengewicht aufweisen, sondern daß darüber hinaus auch Ihre Installation d.h. die Herstellung einer mechanisch und elektrisch einwandfreien Verbindung mit dem Abschirmgeflecht, einen beträchtlichen Zeitaufwand erfordert.

Die Aufgabe der Erfindung besteht darin, eine gattungsgemäße Einrichtung mit Verzweigungselementen, Verbindungselementen sowie mit Formstücken derart zu verbessern, daß die Herstellkosten dieser Elemente und Formstücke durch einfachere Ausbildung wesentlich gesenkt werden.

Die Aufgabe der Erfindung wird durch die kennzeichnenden Merkmale des Patentanspruchs 1 gelöst.

Vorteilhafte Weiterbildungen der Erfindung sind durch die Merkmale der Ansprüche 2 bis 4 gekennzeichnet. Hierdurch sind insbesondere die Verzweigungselemente infolge einfacherer Werkzeuge mit geringeren Kosten herstellbar.

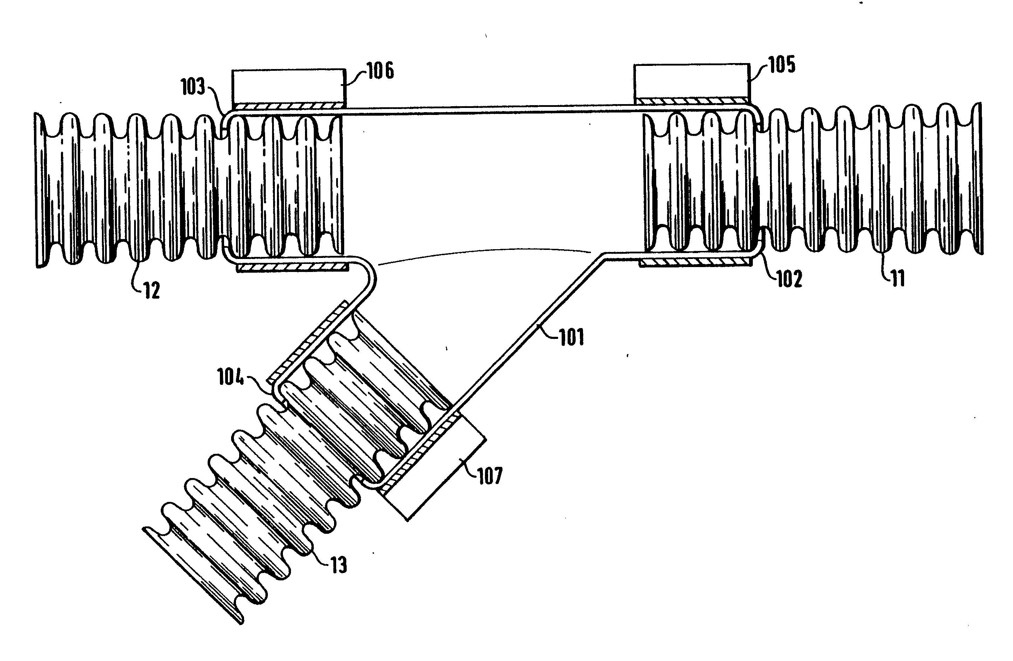

In der Zeichnung ist ein erfindungsgemäßen Verzweigungselement schematisch dargestellt.

Bei dem gezeigten Verzweigungselement 101 ist ersichtlich, daß an seinen drei Enden nur noch insofern eine Anpassung an die Außenform des Profilschlauches 11,12,13 erfolgt, als hier Bördel 102 bis 104 vorgesehen sind, die jeweils in eine der äußeren Rillen des Profilschlauches eingreifen. Damit sind die mit der Außenfläche des Profilschlauches 4 in Berührung kommenden Bereiche des Verzweigungselementes 6 mindestens teilweise der Außenform des Profilschlauches 4 angepaßt. Das aus Blech hergestellte Verzweigungselement 101 besteht aus zwei Halbschalen und zeigt im übrigen wegen des Wegfalls mehrerer durch Tiefziehen hergestellter Wülste eine weitgehend glatte Oberfläche. Die Halbschalen sind durch drei Klemmelemente 105 bis 107 fest mit den Schlauchelementen 11,12,13 verbunden. Eine Ausgestaltung besteht darin, daß die Bördel 102 bis 104 aus einzelnen umgebogenen Lappen bestehen.

## Ansprüche

1. Einrichtung zum Schutz elektrischer Anlagen gegen elektromagnetische Störungen, insbesondere Überspannungen und Blitzeinwirkungen, in Form metallischer Profilschläuche, die die zwischen den einzelnen elektrischen Geräten verlegten Leitungen umgeben und die elektrisch leitend mit Ableitpunkten verbunden sind, dadurch gekennzeichnet, daß die mit der Außenfläche des Profilschlauches (4,10,11,12,13) in Berührung kommenden Bereiche von Elementen,wie Verzweigungselementen (6), Verbindungselementen (14) und Formstücken (15) mindestens teilweise der Außenform des Profilschlauches (4,10,11,12,13) angepaßt sind.

2. Einrichtung nach Anspruch 1, dadurch gekennzeichnet, daß die Verzweigungselemente (6), die Verbindungselemente (14) sowie die Formstükke (15) je Verbindung mit einem Schlauchende einen Wulst aufweisen, der in eine äußere Rille des Schlauches (4) eingreift.

3. Einrichtung nach Anspruch 1, dadurch gekennzeichnet, daß die Verzweigungselemente (6), die Verbindungselemente (14) sowie die Formstükke (15) je Verbindung mit einem Schlauchende ein Bördel aufweisen, das in eine äußere Rille des Schlauches (4) eingreift.

4. Einrichtung nach Anspruch 3, dadurch gekennzeichnet, daß die Bördel (102,103,104) aus einzelnen umgebogenen Lappen bestehen.